# EUROPÄISCHE PATENTANMELDUNG

(11) **EP 3 081 909 A1**
(43) Veröffentlichungstag der Anmeldung: **19.10.2016**
(21) Anmeldenummer: 15163346.8
(22) Anmeldetag: 13.04.2015
(51) Int. Cl.: G01F 1/684, B01J 20/00, B01D 53/00, F15D 1/02, G01F 15/12, B01J 20/28

(54) **ANORDNUNG MIT EINEM STRÖMUNGSGLEICHRICHTER**

(71) Anmelder: Carl Freudenberg KG, 69469 Weinheim (DE)
(72) Erfinder: Stahl, Ulrich, 69514 Laudenbach (DE)

(57) **Zusammenfassung**

Eine Anordnung, umfassend eine Leitung (1) und einen Strömungsgleichrichter (2), wobei der Strömungsgleichrichter (2) in die Leitung (1) eingebaut ist, um einem strömenden Gas nach Durchströmen des Strömungsgleichrichters (2) auf einer Abströmseite (3) innerhalb der Leitung (1) ein vergleichmäßigtes Strömungsprofil zu verleihen, ist im Hinblick auf die Aufgabe, eine Anordnung anzugeben, welche bei teilearmem und kompaktem Aufbau erlaubt, ein strömendes Gas einerseits im Hinblick auf sein Strömungsprofil zu vergleichmäßigen und andererseits Bestandteile eines Gases zu adsorbieren, dadurch gekennzeichnet, dass der Strömungsgleichrichter (2) als Wabenkörper ausgebildet ist, der eine Vielzahl von Kanälen (5) aufweist, die von einander durch Kanalwände (6) abgetrennt sind, wobei der Wabenkörper aus Aktivkohle gefertigt ist oder Aktivkohle aufweist.

## Beschreibung

### Technisches Gebiet

Die Erfindung betrifft eine Anordnung gemäß dem Oberbegriff des Patentanspruchs 1 und eine Verwendung eines Strömungsgleichrichters.

### Stand der Technik

Es ist bereits bekannt, Strömungsgleichrichter in einer gasdurchströmten Leitung anzuordnen, um ein Strömungsprofil über einen durchströmten Querschnitt zu vergleichmäßigen. Daher umfassen übliche Anordnungen zumindest eine Leitung und einen Strömungsgleichrichter, wobei der Strömungsgleichrichter in die Leitung eingebaut ist, um einem strömenden Gas nach Durchströmen des Strömungsgleichrichters auf einer Abströmseite innerhalb der Leitung ein vergleichmäßigtes Strömungsprofil zu verleihen.

Strömungsgleichrichter des Stands der Technik sind häufig aus Kunststoff oder Metall hergestellt. Üblicherweise werden hierbei die Funktionen der Strömungsgleichrichtung und Adsorption durch zwei verschiedene Bauteile ausgeführt, welche räumlich voneinander getrennt sind. Hierdurch ist für diese zwei Bauteile ein großer Platzbedarf in einem Leitungssystem zur Luftführung erforderlich.

Der Erfindung liegt daher die Aufgabe zu Grunde, eine Anordnung anzugeben, welche bei teilearmem und kompaktem Aufbau erlaubt, ein strömendes Gas einerseits im Hinblick auf sein Strömungsprofil zu vergleichmäßigen und andererseits Bestandteile eines Gases zu adsorbieren.

Erfindungsgemäß wird die voranstehende Aufgabe mit den Merkmalen der Patentansprüche 1 und 6 gelöst.

Erfindungsgemäß ist erkannt worden, dass ein Strömungsgleichrichter zugleich als Adsorptionsfilterelement verwendet werden kann. Dabei werden beide Funktionen, nämlich Strömungsgleichrichtung und Adsorption, durch ein Bauteil ausgeführt.

Erfindungsgemäß ist auch erkannt worden, dass als Strömungsgleichrichter ein Wabenkörper verwendet werden kann, der eine Vielzahl von Kanälen aufweist, die voneinander durch Kanalwände abgetrennt sind, wobei der Wabenkörper aus Aktivkohle gefertigt ist oder Aktivkohle aufweist. Der Strömungsgleichrichter ist als Wabenkörper aufgebaut, so dass über die Wabenstruktur, nämlich über Wanddicken und Wandabstände, die Gleichrichterfunktion variabel eingestellt werden kann. Insbesondere ist der Wabenkörper vollständig aus einem Material hergestellt, welches mehrheitlich aus Aktivkohle besteht, oder er besteht aus einem mit Aktivkohle beschichteten Substrat. Die Aktivkohle oder Aktivkohlebeschichtung erfüllt die Funktion, Kohlenwasserstoffe zu adsorbieren.

Erfindungsgemäß ist hierbei konkret erkannt worden, dass zwei Funktionen durch ein kompaktes Bauteil erfüllt werden können. Erfindungsgemäß ist eine kostengünstige Lösung angegeben, welche den beiden Anforderungen Strömungsgleichrichtung und Gasadsorption gerecht wird.

Folglich ist die eingangs genannte Aufgabe gelöst.

Der Wabenkörper könnte vollständig aus Aktivkohle gefertigt sein. Der Strömungsgleichrichter in der Ausgestaltung als Wabenkörper aus Aktivkohle besitzt den Vorteil, dass er aufgrund seines Herstellverfahrens keine Aktivkohlepartikeln emittiert und daher auch vorteilhaft als Adsorptionsfilterelement verwendet werden kann.

Auf der Abströmseite könnte ein Luftmassensensor angeordnet sein. Hierdurch wird ein Strömungsgleichrichter realisiert, der die Aufgabe hat, die Luftgeschwindigkeiten nach Betrag und Richtung zu vergleichmäßigen, so dass zum Beispiel in einem Motorluftansaugtrakt ein dem Strömungsgleichrichter nachgeschalteter Luftmassensensor in die Lage versetzt wird, mit sehr geringen Schwankungen die lokale Luftgeschwindigkeit zu messen. Die Werte, die von dem Luftmassensensor an einem bestimmten Ort erfasst werden, sind durch die Vergleichmäßigung des Luftgeschwindigkeitsprofils relativ repräsentativ für andere Orte nach dem Strömungsgleichrichter, an denen keine Luftmassensensoren vorgesehen sind.

Vor diesem Hintergrund könnte auf der Abströmseite ein Motor eines Kraftfahrzeugs angeordnet sein, von welchem bei Stillstand des Kraftfahrzeuges Verbrennungsgase zum Strömungsgleichrichter zurück diffundieren. Eine zweite Funktion des Strömungsgleichrichters ist es, die nach dem Abschalten des Motors, nämlich eines Verbrennungsmotors, vom Motorraum eines Kraftfahrzeugs über eine Luftansaugstrecke zurückströmenden Kohlenwasserstoffe zu adsorbieren, so dass ein Austreten in die Umwelt verhindert wird. Der Wabenkörper aus Aktivkohle, der in einem Motorluftansaugtrakt eines Kraftfahrzeugmotors während des Motorbetriebes als Strömungsgleichrichter genutzt wird, kann zusätzlich bei Motorstillstand als Adsorptionsfilterelement für die zurückströmenden Kohlenwasserstoffe aus dem Motorraum verwendet werden. Er trägt dadurch zur Erfüllung der LEV III Anforderungen in den USA bei. Vorteilhaft ist der Wabenkörper in dieser Anwendung Strömungsgleichrichter und Adsorptionsfilterelement in einem Bauteil.

LEV Standard ist eine Abkürzung für Low Emission Vehicle Standard (dt.: Fahrzeug mit geringen Emissionen Vorschrift). Diese wurde 1996 im US-Bundesstaat Kalifornien eingeführt. Heute ist das Programm in der 3. Stufe gültig, deshalb wird in dieser Schrift von LEV III gesprochen.

LEV III betrifft Fahrzeuge der Modelljahre 2015 bis 2025. Der LEV III Standard wurde inzwischen in 12 weitere US-Bundesstaaten übernommen und wird im Jahre 2017 auch in Südkorea eingeführt.

Der LEV III Standard gibt Grenzwerte für flüchtige Kohlenwasserstoffe vor, die ein Fahrzeug im Stillstand in einem bestimmten Zeitraum abgeben darf. Die Einhaltung dieser Grenzwerte muss vom Fahrzeughersteller nachgewiesen werden, um eine Zulassung in den betroffenen US-Bundestaaten zu bekommen.

Der Wabenkörper aus Aktivkohle zeigt gegenüber herkömmlichen Adsorptionsfilterelementen, die zur Erfüllung der LEV III Anforderungen eingesetzt werden, den Vorteil, dass er als sogenanntes Full-Flow-Adsorptionsfilterelement eine um mindestens 50% reduzierte Druckdifferenz gegenüber einem herkömmlichen Full-Flow-Adsorptionsfilterelement besitzt.

Herkömmliche Full-Flow-Adsorptionsfilterelemente für LEV III Anforderungen sind z.B. Faltenfilterelemente. Herkömmliche Faltenfilterelemente zur Adsorption werden üblicherweise als Laminat hergestellt, welches Aktivkohlepartikel zwischen Trägermaterialien einbindet. Diese Aktivkohlepartikel können sich bei Full-Flow-Anwendungen lösen und mit dem Luftstrom ausgetragen werden.

Auf der Abströmseite des Strömungsgleichrichters könnte ein Wärmetauscher einer Klimaanlage angeordnet sein. Eine weitere Anwendung des genannten Strömungsgleichrichters besteht darin, den Zuluftstrom einer Klimaanlage nach Betrag und Richtung zu vergleichmäßigen und gleichzeitig von Kohlenwasserstoffen zu reinigen. Vorteilhaft werden die Strömungsgleichrichtung und die Gasadsorption innerhalb einer Klimaanlage gleichzeitig von einem Bauteil erbracht. Bei Positionierung des Strömungsgleichrichters vor dem Wärmetauscher innerhalb einer Klimaanlage, wird die Effizienz, nämlich der Wirkungsgrad, des Wärmetauschers, gesteigert, da durch den Strömungsgleichrichter sichergestellt ist, dass der Luftstrom eine größere Fläche des Wärmetauschers erreicht. Dadurch wird der Wirkungsgrad des Wärmetauschers gesteigert. Herkömmliche Adsorptionsfilterelemente in Klimaanlagen werden üblicherweise als Faltenfilterelemente aus einem Laminat hergestellt, welches Aktivkohlepartikel zwischen Trägermaterialien einbindet. Diese Aktivkohlepartikel können sich im Betrieb lösen und mit dem Luftstrom ausgetragen werden.

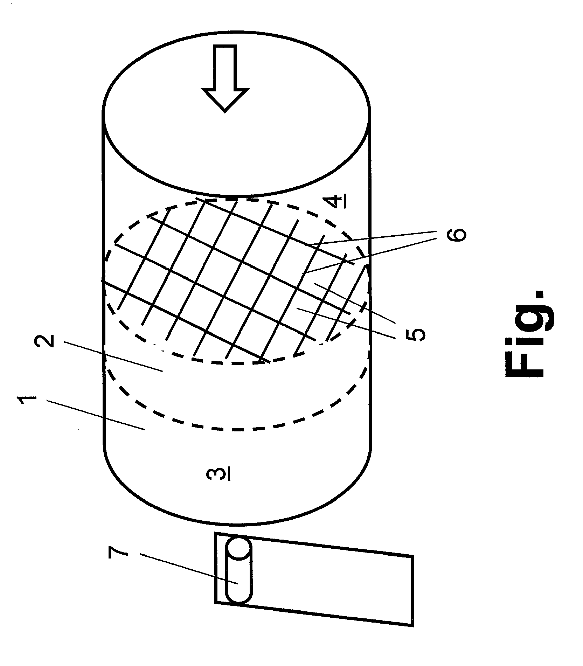

### Kurzbeschreibung der Zeichnung

In der Zeichnung zeigt die
- Fig.: eine Anordnung, welche einen Strömungsgleichrichter aufweist.

### Ausführung der Erfindung

Die Fig. zeigt eine Anordnung, umfassend eine Leitung 1 und einen Strömungsgleichrichter 2, wobei der Strömungsgleichrichter 2 in die Leitung eingebaut ist, um einem strömenden Gas nach Durchströmen des Strömungsgleichrichters 2 auf einer Abströmseite 3 innerhalb der Leitung 1 ein vergleichmäßigtes Strömungsprofil zu verleihen. Der Strömungsgleichrichter 2 wird auf der Anströmseite 4 vom Gas angeströmt.

Der Strömungsgleichrichter 2 ist als Wabenkörper ausgebildet, der eine Vielzahl von Kanälen 5 aufweist, die voneinander durch Kanalwände 6 abgetrennt sind, wobei der Wabenkörper aus Aktivkohle gefertigt ist oder Aktivkohle aufweist. Der Wabenkörper ist vollständig aus Aktivkohle gefertigt.

Unter einer Vielzahl werden mehr als zwei Kanäle 5, bevorzugt mehr als drei, mehr als vier, mehr als fünf, mehr als sechs, mehr als sieben, mehr als acht, mehr als neun oder mehr als zehn Kanäle 5 verstanden.

Auf der Abströmseite 3 ist ein Luftmassensensor 7 angeordnet. Auf der Abströmseite 3 ist ein nicht gezeigter Motor eines Kraftfahrzeugs angeordnet, von welchem Verbrennungsgase zum Strömungsgleichrichter 2 zurück diffundieren.

Auf der Abströmseite 3 kann ein nicht gezeigter Wärmetauscher einer Klimaanlage angeordnet sein.

## Patentansprüche

1. Anordnung, umfassend eine Leitung (1) und einen Strömungsgleichrichter (2), wobei der Strömungsgleichrichter (2) in die Leitung (1) eingebaut ist, um einem strömenden Gas nach Durchströmen des Strömungsgleichrichters (2) auf einer Abströmseite (3) innerhalb der Leitung (1) ein vergleichmäßigtes Strömungsprofil zu verleihen,
**dadurch gekennzeichnet, dass** der Strömungsgleichrichter (2) als Wabenkörper ausgebildet ist, der eine Vielzahl von Kanälen (5) aufweist, die voneinander durch Kanalwände (6) abgetrennt sind, wobei der Wabenkörper aus Aktivkohle gefertigt ist oder Aktivkohle aufweist.

2. Anordnung nach Anspruch 1, **dadurch gekennzeichnet, dass** der Wabenkörper vollständig aus Aktivkohle gefertigt ist.

3. Anordnung nach Anspruch 1 oder 2, **dadurch gekennzeichnet, dass** auf der Abströmseite (3) ein Luftmassensensor (7) angeordnet ist.

4. Anordnung nach einem der voranstehenden Ansprüche, **dadurch gekennzeichnet, dass** auf der Abströmseite (3) ein Motor eines Kraftfahrzeugs angeordnet ist, von welchem Verbrennungsgase zum Strömungsgleichrichter (2) zurück diffundieren.

5. Anordnung nach einem der voranstehenden Ansprüche, **dadurch gekennzeichnet, dass** auf der Abströmseite (3) ein Wärmetauscher einer Klimaanlage angeordnet ist.

6. Verwendung eines Strömungsgleichrichters (2) zugleich als Adsorptionsfilterelement.

7. Verwendung nach Anspruch 6, **dadurch gekennzeichnet, dass** der Strömungsgleichrichter (2) in einer Anordnung nach einem der Ansprüche 1 bis 5 verwendet wird.
